# EUROPEAN PATENT APPLICATION

(11) **EP 2 600 471 A1**
(43) Date of publication of application: **05.06.2013**
(21) Application number: 12168926.9
(22) Date of filing: 22.05.2012
(51) Int. Cl.: H01R 13/52, B60R 16/02, G01D 11/24, H02G 3/22, H02G 15/013

(54) **Terminal cable assembly having water proof structure**

(30) Priority: 29.11.2011 KR 20110125600
(71) Applicant: LG Innotek Co., Ltd., Seoul 100-714 (KR)
(72) Inventor: Lee, Suhyung, 100-714 SEOUL (KR); Lee, Changhwan, 100-714 SEOUL (KR)
(74) Representative: Novagraaf Technologies

(57) **Abstract**

Disclosed is a terminal cable assembly having waterproof structure, the terminal cable assembly including a cable provided in a bundle of a plurality of wires, a terminal member coupled to a distal end of the cable, a first molding molded and formed on a bent position of the cable, and a second molding molded and formed on the first molding, where the first molding serves as a core.

## Description

### CROSS-REFERENCE TO RELATED APPLICATION

The present application is based on, and claims priority from, Korean Application Number 10-2011-0125600, filed on November 29, 2011, the disclosure of which is incorporated by reference herein in its entirety.

### BACKGROUND OF THE DISCLOSURE

### 1. Field of the Disclosure

The present disclosure relates to a terminal cable assembly having waterproof structure.

### 2. Discussion of the Related Art

Generally, a cable for supplying an electric power to an electronic part mounted at an area easily exposed to moisture, or connecting to a predetermined controller for signal exchange is equipped with a waterproof structure.

A conventional waterproof structure is such that an exposed portion of a cable mounted with a terminal is wrapped with a rubbery seal, and the terminal cable is installed. For example, a cable for supplying power to a torque index sensor used for an EPS (Electronic Power Steering) system is generally such that a cable, formed by a plurality of wire strands being wrapped and a portion exposed to an outside being wrapped with a rubbery seal, is fixedly coupled to a housing mounted with the torque index sensor.

At this time, in a case the terminal cable using the rubbery seal is used, the rubbery seal may be torn apart or damaged due to interference among parts or inattention of an operator during assembly process. The problem is that the seal portion cannot be checked from outside after the assembly process, and if a product defect is generated by the damaged seal, there is no way to check the damaged seal, resulting in a drop in product reliability.

It is, therefore, desirable to overcome the above problems and others by providing an improved terminal cable assembly having waterproof structure.

### SUMMARY OF THE DISCLOSURE

This section provides a general summary of the disclosure, and is not a comprehensive disclosure of its full scope or all of its features.

The present disclosure is directed to cope with the abovementioned problems/disadvantages and it is an object of the present disclosure to provide an improved terminal cable assembly having waterproof structure that can be hardly damaged during assembly process.

Technical problems to be solved by the present disclosure are not restricted to the above-mentioned description, and any other technical problems not mentioned so far will be clearly appreciated from the following description by the skilled in the art.

In a general aspect of the present disclosure, there is provided a terminal cable assembly having waterproof structure, the terminal cable assembly comprising: a cable provided in a bundle of a plurality of wires; a terminal member coupled to a distal end of the cable; a first molding molded and formed on a bent position of the cable; and a second molding molded and formed on the first molding, where the first molding serves as a core.

Preferably, but not necessarily, the cable is bent in a shape of "L".

Preferably, but not necessarily, the first molding is formed on a surface with at least one or more grooves.

Preferably, but not necessarily, the second molding includes a cable support unit for preventing a cable provided at the other side of the cable connected by the terminal from being bent.

Preferably, but not necessarily, the cable support unit is integrally formed with the second molding.

Preferably, but not necessarily, the first and second moldings are injection molded with a rubber material.

Preferably, but not necessarily, the second molding is injection molded with a rubber material.

The terminal cable assembly having waterproof structure according to the present disclosure has an advantageous effect in that an exposed portion is doubly injection molded to prevent a waterproofed seal from being damaged during an assembly process, and the assembly process can be simplified by an integrated process to enhance the productivity.

### BRIEF DESCRIPTION OF THE DRAWINGS

The accompanying drawings, which are included to provide a further understanding of the present disclosure and are incorporated in the present disclosure and constitute a part of this application, and together with the description, serve to explain the principle of the disclosure. In the drawings:
FIG. 1 is a schematic view illustrating an assembled state of a terminal cable assembly having waterproof structure according to an exemplary embodiment of the present disclosure;
FIG. 2 is a schematic view illustrating a cable of FIG. 1 bent in a shape of "L" and bound in one bundle;
FIG. 3 is a schematic view illustrating a state of a first molding being injection-molded on a bent position of the cable of FIG.2; and
FIG. 4 is a schematic view illustrating a state of a second molding being injection-molded on the first molding of FIG.3.

### DETAILED DESCRIPTION

Advantages and features of the present invention may be understood more readily by reference to the following detailed description of exemplary embodiments and the accompanying drawings. Detailed descriptions of well-known functions, configurations or constructions are omitted for brevity and clarity so as not to obscure the description of the present disclosure with unnecessary detail. Thus, the present disclosure is not limited to the exemplary embodiments which will be described below, but may be implemented in other forms. In the drawings, the width, length, thickness, etc. of components may be exaggerated or reduced for the sake of convenience. Furthermore, throughout the descriptions, the same reference numerals will be assigned to the same elements in the explanations of the figures, and explanations that duplicate one another will be omitted.

Accordingly, the meaning of specific terms or words used in the specification and claims should not be limited to the literal or commonly employed sense, but should be construed or may be different in accordance with the intention of a user or an operator and customary usages. Therefore, the definition of the specific terms or words should be based on the contents across the specification. The terms "a" and "an" herein do not denote a limitation of quantity, but rather denote the presence of at least one of the referenced item.

Now, a terminal cable assembly having waterproof structure according to an exemplary embodiment of the present disclosure will be described with reference to the accompanying drawings.

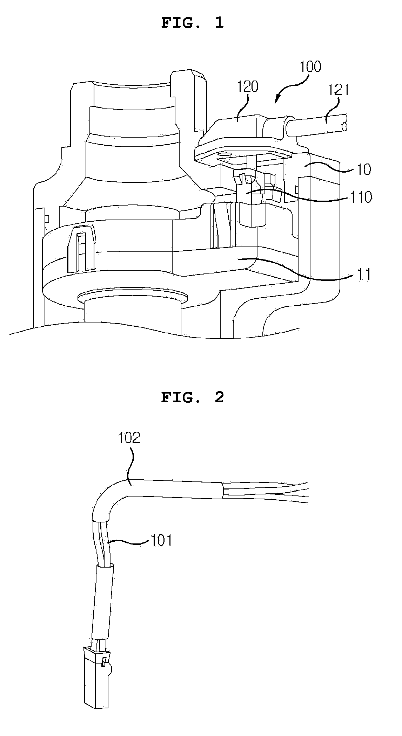

FIG.1 is a schematic view illustrating an assembled state of a terminal cable assembly having waterproof structure according to an exemplary embodiment of the present disclosure, FIG.2 is a schematic view illustrating a cable of FIG. 1 bent in a shape of "L" and bound in one bundle,

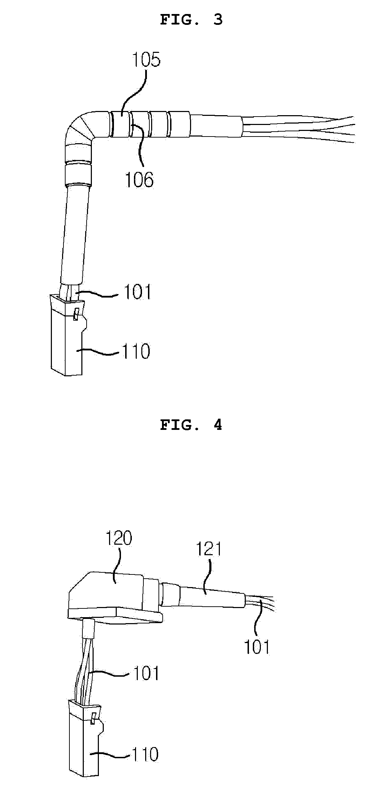

FIG.3 is a schematic view illustrating a state of a first molding being injection-molded on a bent position of the cable of FIG.2, and FIG.4 is a schematic view illustrating a state of a second molding being injection-molded on the first molding of FIG.3.

A terminal cable assembly (100) having waterproof structure according to an exemplary embodiment of the present disclosure includes a cable (101), a terminal member (110), a first molding (105) and a second molding (120).

The cable (101) is preferably provided in a bundle of a plurality of electric wires. According to an exemplary embodiment of the present disclosure, the cable (101) is provided as a power cable, and as shown in FIG.1, the cable (101) may be so provided as to supply an electric power to a sensor member (11) mounted inside a housing (10). For example, in a case the sensor member (11) uses a DC power, the cable (101) may include at least two cables each having a positive (+) polarity and a negative (-) polarity, and a ground wire.

Referring to FIG. 2, the cable (101) may be bent in a shape of "L", where a bent portion (102) of the cable (101) is wrapped with an insulation tape to bind a plurality of cables in one bundle. The reason of bending the cable (101) in the shape of "L" is to minimize a connection space of the cable (101). That is, as shown in FIG. 1, in a case a non-bent cable (101) is connected to a part of the sensor member (11), there may be generated a problem of excessively increasing a space for cable connection.

Furthermore, in a case the cable is arranged in the same direction as a coupling direction of the cable, and a load is applied to the cable (101) and the cable (101) is then pulled, the load itself may be transferred to a cable connection unit to disengage a coupling between the second molding (120) and the housing (10). The coupling between the second molding (120) and the housing (10) will be described later.

The terminal member (110) is coupled to a distal end of the cable (101), where it is preferable that a power supplied from the electric wire be coupled to a connecting object such as the sensor member (11). Furthermore, the terminal member (110) is generally formed with a resin material, and a distal end thereof is provided a conductor for terminal connection, where the conductor and the cable (101) are conductibly connected. The terminal member (110) functions to connect the cable (101) formed with a plurality of wires to a terminal unit provided at a connection object such as the sensor member (11) illustrated in FIG.1. However, the shape of the terminal member can be variably provided.

Referring to FIG.3, the first molding (105) is formed by injection-molding the bent portion (102) as a core, and preferably provided in an insulation material.

According to an exemplary embodiment of the present disclosure, the first molding (105) is preferably formed with a resin material or rubber material. Furthermore, the first molding (105) is preferably formed at a surface with a plurality of grooves (106). The groove (106) serves to increase a coupling force between the first molding (105) and the second molding (120) when the second molding (120, described later) is injection-molded.

That is, even if a force is applied to an axial direction of the cable (101), the coupling force between the first molding (105) and the second molding (120) can be tightly maintained by the groove (106).

Referring to FIG.4, the second molding (120) is injection-molded using the first molding (105) as a core, and the second molding (120) is preferably provided at an exposed portion of an outermost area of the terminal cable assembly (100) to prevent an outside moisture from entering a part of the connection object such as the sensor member (11) mounted on the housing (10) of illustrated in FIG.1.

According to an exemplary embodiment of the present disclosure, the second molding (120) is preferably formed with a rubber material and fixedly secured to a predetermined coupling position of the housing (10) illustrated in FIG.1. A separate coupling member such as a bolt is used to fix the second molding, and if the second molding (120) is air-tightly fixed using the bolt, a surface of the second molding (120) and a surface of the housing (10) that faces the surface of the second molding (120) may be air-tightly surface-contacted to prevent the sensor member (11) mounted inside of the housing (10) from being entered by moisture.

Particularly, in a case the second molding (120) is formed with a rubber material, and the second molding (120) is coupled to the housing (10) using the bolt, the surface of the second molding (120) and the surface of the housing (10) that faces the surface of the second molding (120) are air-tightly surface-contacted to provide a strong waterproof function through elastically deformed coupling part.

Furthermore, the second molding may include a cable support unit (121) for preventing a cable (101) provided at the other side of the cable (101) connected by the terminal member (110) from being bent. The cable support unit (121) is preferably integrally formed with the second molding (120) with a predetermined or longer length, whereby the cable (101) near to the second molding (120) is prevented from being suddenly bent to cause a damage to the coating.

As apparent from the foregoing, the terminal cable assembly having waterproof structure thus configured according to the exemplary embodiments of the present disclosure has an industrial applicability in that assembly can be finished only by coupling the second molding (120) to a predetermined mounting position of the housing (10) to enhance operability, and dispensing with a separate sealing member for waterproofness.

Another applicability is that the second molding (120) performing the sealing function can be checked from outside with the naked eye, such that even if there is generated a defect on the second molding (120) in the manufacturing process, the defect can be immediately discerned to thereby enhance the product reliability.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims.

## Claims

1. A terminal cable assembly having waterproof structure, the terminal cable assembly comprising:
a cable provided in a bundle of a plurality of wires;
a terminal member coupled to a distal end of the cable;
a first molding molded and formed on a bent position of the cable; and
a second molding molded and formed on the first molding, where the first molding serves as a core.

2. The terminal cable assembly of claim 1, wherein the cable is bent in a shape of "L".

3. The terminal cable assembly of claim 1, wherein the first molding is formed on a surface with at least one or more grooves.

4. The terminal cable assembly of claim 1, wherein the second molding includes a cable support unit for preventing a cable provided at the other side of the cable connected by the terminal from being bent.

5. The terminal cable assembly of claim 4, wherein the cable support unit is integrally formed with the second molding.

6. The terminal cable assembly of claim 1, wherein the first and second moldings are injection molded with a rubber material.

7. The terminal cable assembly of claim 2, wherein the first and second moldings are injection molded with a rubber material.

8. The terminal cable assembly of claim 3, wherein the first and second moldings are injection molded with a rubber material.

9. The terminal cable assembly of claim 4, wherein the first and second moldings are injection molded with a rubber material.

10. The terminal cable assembly of claim 5, wherein the first and second moldings are injection molded with a rubber material.

11. The terminal cable assembly of claim 1, wherein the second molding is injection molded with a rubber material.

12. The terminal cable assembly of claim 2, wherein the second molding is injection molded with a rubber material.

13. The terminal cable assembly of claim 3, wherein the second molding is injection molded with a rubber material.

14. The terminal cable assembly of claim 4, wherein the second molding is injection molded with a rubber material.

15. The terminal cable assembly of claim 5, wherein the second molding is injection molded with a rubber material.
